# EUROPÄISCHE PATENTANMELDUNG

(11) **EP 3 629 202 A1**
(43) Veröffentlichungstag der Anmeldung: **01.04.2020**
(21) Anmeldenummer: 18196770.4
(22) Anmeldetag: 26.09.2018
(51) Int. Cl.: G06F 17/50, B33Y 50/00, B29C 64/386

(54) **VERFAHREN ZUR OPTIMIERUNG EINES MODELLS EINES DURCH EIN ADDITIVES FERTIGUNGSVERFAHREN HERZUSTELLENDEN BAUTEILS, VERFAHREN ZUM HERSTELLEN EINES BAUTEILS, COMPUTERPROGRAMM SOWIE DATENTRÄGER**

(71) Anmelder: Siemens Aktiengesellschaft, 80333 München (DE)
(72) Erfinder: Blattner, Franz-Georg, 13353 Berlin (DE); Küsters, Yves, 10829 Berlin (DE)

(57) **Zusammenfassung**

Um besonders vorteilhafte mechanische Eigenschaften und gleichzeitig ein besonders geringes Gewicht eines additiv zu fertigenden Bauteils realisieren zu können, wird ein Verfahren zur Optimierung eines zumindest eine virtuelle Gitterstruktur (10) aufweisenden virtuellen Modells (12) des Bauteils vorgeschlagen. Bei dem Verfahren wird zumindest die virtuelle Gitterstruktur (10), welche Knoten (14) als erste Strukturelemente, an den Knoten (14) miteinander verbundene Streben (16) als zweite Strukturelemente und als Anbindungspunkte (18) an eine virtuelle Bauteilaußenhaut (20) des virtuellen Modells (12) ausgebildete dritte Strukturelemente aufweist, anhand einer Topologieoptimierung (TOP), die durch eine elektronische Recheneinrichtung durchgeführt wird, optimiert und als ein Gestaltungsbereich (22) definiert, dessen Strukturelemente eine jeweilige Ausgangsgeometrie aufweisen (DEF). Durch die Topologieoptimierung (TOP) wird eine jeweilige, aus wenigstens einer auf das virtuelle Modell (12) wirkenden Last resultierende Belastung des jeweiligen Strukturelements ermittelt und zumindest eines der Strukturelemente, dessen ermittelte Belastung einen vorbestimmten Schwellenwert unterschreitet, aus dem Gestaltungsbereich (22) eliminiert.

## Beschreibung

Die Erfindung betrifft ein Verfahren zur Optimierung eines virtuellen Modells eines durch ein additives Fertigungsverfahren herzustellenden Bauteils, ein Verfahren zum additiven Herstellen wenigstens eines Bauteils, ein Computerprogramm sowie einen elektronischen lesbaren Datenträger.

Mit Hilfe von additiven Fertigungsverfahren insbesondere für metallische Werkstoffe ist es möglich, komplexe und räumliche Gitterstrukturen herzustellen. Additive Fertigungsverfahren werden auch als generative Fertigungsverfahren bezeichnet. Üblicherweise sind die Gitterstrukturen aus periodischen Einzelzellen, das heißt aus einer Einzelzelle aufgebaut, welche sich periodisch wiederholt. Insbesondere ist es möglich, Bauteile durch additive Fertigungsverfahren herzustellen, wobei das jeweilige Bauteil beispielsweise wenigstens eine jeweilige Gitterstruktur aufweist. Mit anderen Worten können Bauteile hergestellt werden, die jeweils wenigstens eine durch ein additives Fertigungsverfahren hergestellte Gitterstruktur aufweisen können. Gitterstrukturen weisen einen Gewichtsvorteil gegenüber Bauelementen aus Vollmaterial mit gleichen Abmaßen auf. Ist das die Gitterstruktur aufweisende Bauteil strukturell belastet und somit ein Strukturbauteil, ist es beispielsweise möglich, mit Hilfe der Finite-Elemente-Methode die relative Dichte der Einzelzellen an die Belastung und Beanspruchung anzupassen. Somit lässt sich die Effizienz des Materials in Bezug auf die spezifische Steifigkeit, das heißt das Verhältnis aus E-Modul zu Gewicht des Strukturbauteils gegenüber konventionell ausgelegten und gefertigten Strukturbauteilen erhöhen und optimieren.

Dabei offenbart die US 2015/0190971 A1 ein Verfahren zur Topologieoptimierung von Gitterstruktur zur additiven Fertigung.

Aufgabe der vorliegenden Erfindung ist es, ein Verfahren zur Optimierung eines virtuellen Modells eines durch ein additives Fertigungsverfahren herzustellenden Bauteils, ein Verfahren zum Herstellen wenigstens eines Bauteils durch additive Fertigung, ein Computerprogramm und einen elektronisch lesbaren Datenträger zu schaffen, sodass besonders vorteilhafte mechanische Eigenschaften und ein besonders geringes Gewicht des Bauteils realisiert werden können.

Diese Aufgabe wird durch die Gegenstände der unabhängigen Patentansprüche gelöst. Vorteilhafte Ausgestaltungen mit zweckmäßigen Weiterbildungen der Erfindung sind in den abhängigen Ansprüchen angegeben.

Ein erster Aspekt der Erfindung betrifft ein Verfahren zur Optimierung eines zumindest eine virtuelle Gitterstruktur aufweisenden virtuellen Modells eines durch ein additives Fertigungsverfahren herzustellenden Bauteils. Bei dem Verfahren wird zumindest die virtuelle Gitterstruktur, welche Knoten und an den Knoten miteinander verbundene Streben aufweist, anhand einer Topologieoptimierung optimiert. Die Topologieoptimierung wird durch eine elektronische Recheneinrichtung durchgeführt. Die elektronische Recheneinrichtung ist beispielsweise ein Computer wie beispielsweise ein Desktop PC, sodass das Verfahren beispielsweise durch die elektronische Recheneinrichtung durchgeführt wird.

Um nun besonders vorteilhafte mechanische Eigenschaften und gleichzeitig ein besonders geringes Gewicht des Bauteils realisieren zu können, ist es erfindungsgemäß vorgesehen, dass die virtuelle Gitterstruktur auch Anbindungspunkte an eine virtuelle Bauteilaußenhaut des virtuellen Modells aufweist. Die Streben, die auch als Knotenpunkte bezeichneten Knoten und die Anbindungspunkte sind jeweilige Strukturelemente der Gitterstruktur.

Das zuvor genannte Bauteil wird durch additive Fertigung, das heißt durch das additive Fertigungsverfahren hergestellt, wobei durch das additive Fertigungsverfahren, welches auch als generatives Fertigungsverfahren bezeichnet wird, beispielsweise eine der optimierten, virtuellen Gitterstruktur entsprechende, tatsächliche Gitterstruktur hergestellt wird, wobei die tatsächliche Gitterstruktur durch das generative Fertigungsverfahren hergestellt wird. Somit wird das Bauteil, insbesondere dessen tatsächliche Gitterstruktur von der durch das Verfahren optimierten virtuellen Gitterstruktur hergestellt, wodurch besonders vorteilhafte mechanische Eigenschaften des Bauteils realisiert werden können. Gleichzeitig kann das Gewicht des Bauteils besonders gering gehalten werden. Insbesondere kann eine besonders hohe Steifigkeit, insbesondere eine besonders hohe spezifische Steifigkeit, des Bauteils realisiert werden. Das tatsächlich hergestellte Bauteil weist beispielsweise eine tatsächliche Bauteilaußenhaut auf, an welche die tatsächliche Gitterstruktur angebunden ist. Das virtuelle Modell berücksichtigt somit diese Anbindung der tatsächlichen Gitterstruktur an die tatsächliche Bauteilaußenhaut durch die virtuellen Anbindungspunkte.

Die Gitterstruktur wird im Rahmen des erfindungsgemäßen Verfahrens als ein Gestaltungsbereich definiert, dessen Strukturelemente eine jeweilige, initiale Ausgangsgeometrie aufweisen. Der Gestaltungsbereich wird auch als Designbereich, Designraum oder Designspace bezeichnet. Da die Gitterstruktur als der Gestaltungsraum definiert wird, umfasst der Gestaltungsraum die Strukturelemente der virtuellen Gitterstruktur. In der Topologieoptimierung ist ein beziehungsweise der Designspace (Gestaltungsraum) ein initiales Modell beziehungsweise ein initiales Bauelement, von welchem Material und/oder Teile entfernt werden können beziehungsweise entfernt werden, bis eine finale Form beziehungsweise finale Geometrie während der Topologieoptimierung erreicht ist. Die finale Form beziehungsweise Geometrie ist insbesondere dann erreicht, wenn die durch die Topologieoptimierung ermittelte finale Form wenigstens ein vorbestimmtes Optimierungskriterium erfüllt, welches beispielsweise umfasst, dass eine aus wenigstens einer auf die finale Form wirkenden Last resultierende Belastung der finalen Form einen insbesondere vorbestimmten oder vorbestimmbaren Schwellenwert unterschreitet beziehungsweise dass die Belastung möglichst gering ist beziehungsweise minimal ist.

Bei dem erfindungsgemäßen Verfahren ist es ferner vorgesehen, dass - der zuvor genannten Beschreibung des Gestaltungsraums entsprechend - durch die Topologieoptimierung eine jeweilige, aus wenigstens einer auf das virtuelle Modell wirkenden virtuellen Last resultierende virtuelle Belastung des jeweiligen virtuellen Strukturelements der virtuellen Gitterstruktur beziehungsweise Gestaltungsraums ermittelt wird. Außerdem wird durch die Topologieoptimierung zumindest eines der Strukturelemente, dessen ermittelte Belastung einen vorbestimmten Schwellenwert unterschreitet, aus dem Gestaltungsbereich eliminiert. Des Weiteren ist es erfindungsgemäß vorgesehen, dass bei der Topologieoptimierung zwischen jeweiligen Beanspruchungsfällen der jeweiligen Strukturelemente differenziert wird, wobei in Abhängigkeit von dem jeweiligen Beanspruchungsfall zumindest eine der initialen Ausgangsgeometrien durch eine Optimierungsgeometrie ersetzt wird. Hierdurch wird beispielsweise die initiale, virtuelle Gitterstruktur zu der finalen Form beziehungsweise Geometrie um- beziehungsweise weitergebildet, sodass beispielsweise eine aus der Last resultierende Gesamtbelastung der virtuellen Gitterstruktur ein vorbestimmtes Optimierungskriterium erfüllt. Das vorbestimmte Optimierungskriterium sieht insbesondere vor, dass die Gesamtbelastung einen vorgebbaren oder vorgegebenen Grenzwert unterschreitet, und dass beispielsweise gleichzeitig das Gewicht der virtuellen Gitterstruktur so gering wie möglich ist.

Um die Optimierung der virtuellen Gitterstruktur auf besonders zeit- und kostengünstige Weise realisieren zu können, ist es ferner bei dem erfindungsgemäßen Verfahren vorgesehen, dass bei der Topologieoptimierung Balkenelemente, insbesondere ausschließlich Balkenelemente, zur Bildung beziehungsweise Beschreibung oder Definierung des Gestaltungsraums verwendet werden. Mit anderen Worten ist es vorzugsweise vorgesehen, dass der Gestaltungsraum (Designspace) durch Balkenelemente gebildet beziehungsweise beschrieben wird.

Der Erfindung liegen insbesondere die folgenden Erkenntnisse zugrunde: Ein technisches Problem bei herkömmlichen Optimierungen von Gitterstrukturen liegt insbesondere darin, dass bestehende Optimierungsmethoden das Potenzial hinsichtlich der zuvor beschriebenen Materialeffizienz nicht voll ausschöpfen können. Denn es ist nicht auszuschließen, dass einzelne Streben in der Gitterstruktur eine sehr geringe oder gar zu vernachlässigende Beanspruchung erfahren. Diese Streben stellen somit überschüssiges Material dar, welches nicht oder kaum zur Steifigkeit und zur Aufnahme von Lasten beiträgt. Daher sollte ein anderer, neuer Optimierungsansatz gefunden werden.

Bei der herkömmlicherweise zum Einsatz kommenden Topologieoptimierung von Gitterstrukturen existieren noch keine zeit- und kostengünstigen Optimierungslösungen, da konventionelle Topologieoptimierungsmethoden in der Finite-Elemente-Rechnung mit zeit- und kostenintensiven dreidimensionalen Volumenelementen zur Berechnung verwenden. Bei äußerst dünnwandigen Strukturen wie beispielsweise bei Gitterstrukturen kommt es daher sehr schnell zu unökonomischen Rechenzeiten. Hinzu kommt, dass Topologieoptimierungsmethoden nach dem Stand der Technik das Knicken und insbesondere Euler'sche Knickfälle der Streben nicht berücksichtigen. Dabei kann das Knicken der auch als Streben bezeichneten Gitterstreben ein Versagenskriterium von Gitterstrukturen sein.

Herkömmlicherweise besteht ein weiteres technisches Problem darin, dass üblicherweise eine stark eingeschränkte Auswahl an Geometrien von Einzelzellen durch Fertigungsrandbedingungen für additive Fertigungsverfahren für metallische Werkstoffe besteht. Denn aufgrund der Restriktion des Überhangwinkels in Bezug auf die Aufbaurichtung, entlang welcher das Bauteil durch die additive Fertigung hergestellt wird, lassen sich die Gitterstreben und die auch als Gitterknoten bezeichneten Knoten ohne abstützendes und energieableitendes Zusatzmaterial, das heißt ohne Stützstruktur, nicht beliebig in alle Raumrichtungen aufbauen. So ist es nach dem Stand der Technik unmöglich, stützstrukturfreie Gitterstreben beispielsweise quer zur additiven Aufbaurichtung zu fertigen. Je nach Anforderungen und dem Verhältnis der Länge zum Durchmesser der Gitterstreben kann der kritische Überhangwinkel variieren. Dies führt herkömmlicherweise dazu, dass die Gitterstrukturen durch additive Fertigungsverfahren für metallische Werkstoffe schlichtweg nicht gefertigt werden können.

Die zuvor genannten Probleme und Nachteile können durch das erfindungsgemäße Verfahren vermieden werden. Hierzu wird die virtuelle Gitterstruktur als Designspace (Gestaltungsbereich) definiert. Ein Ergebnis der Topologieoptimierung zeigt dann, welche der Streben und Knoten in der auch als Gitter bezeichneten Gitterstruktur je nach Anforderung überflüssig sind und somit eliminiert werden können und schließlich eliminiert werden. Zusätzlich wird in einem zweiten Optimierungsschritt nach Beanspruchungsfall der Streben, Knoten und auch als Strebenanbindungen bezeichneten Anbindungspunkte zur Bauteilaußenhaut differenziert. So werden zum Beispiel initiale Querschnitte der verschiedenen Streben dem jeweiligen Beanspruchungsfall angepasst, um eine verbesserte spezifische Steifigkeit zu erhalten. So sind beispielsweise biegebeanspruchte Streben mit einem Doppel-T-Querschnitt oder die Ausrundung der Streben- und Knotenanbindungen aufgrund von Spannungsüberhöhungen oder auch knickverbesserte Geometrien umsetzbar.

Außerdem kommt eine im Vergleich zu herkömmlichen Topologieoptimierungen neue, veränderte beziehungsweise verbesserte Topologieoptimierungsmethodik zum Einsatz. Herkömmlicherweise wird ein Designspace durch dreidimensionale Volumenelemente beschrieben beziehungsweise gebildet. Erfindungsgemäß ist es nun vorgesehen, solche dreidimensionalen Volumenelemente zur Bildung des Designspace zu vermeiden, sondern, insbesondere ausschließlich, Balkenelemente zur Bildung beziehungsweise Beschreibung des Designspace zu verwenden. Werden herkömmlicherweise zum Einsatz kommende dreidimensionale Volumenelemente, das heißt 3D-Volumenelemente durch einfache Balkenelemente ersetzt, die beispielsweise Verformungen in Längs- und Querrichtung der Streben berücksichtigen, minimiert sich die Anzahl an Elementen und somit der Rechenaufwand. In der Folge kann das erfindungsgemäße Verfahren zeit- und kostengünstig durchgeführt werden.

Das vorstehend beschriebene additive Fertigungsverfahren eignet sich insbesondere bei der Verarbeitung von metallischen Werkstoffen, kann jedoch gleichermaßen auch bei nichtmetallischen Werkstoffen zum Einsatz kommen.

Als besonders vorteilhaft hat es sich gezeigt, wenn bei der Topologieoptimierung eine Finite-Elemente-Methode durchgeführt wird, anhand welcher die jeweilige Belastung ermittelt wird. Dadurch kann die jeweilige Belastung präzise ermittelt werden, sodass eine besonders vorteilhafte Optimierung der Gitterstruktur realisierbar ist.

Eine weitere Ausführungsform zeichnet sich dadurch aus, dass bei der Topologieoptimierung anhand der Balkentheorie zweiter Ordnung für das jeweilige Balkenelement eine Knickstab-Berechnung durchgeführt wird. Somit ist vorzugsweise eine Integration einer Knickrechnung der Streben beziehungsweise der Balkenelemente in deren Optimierung integriert, wodurch eine besonders zeit- und kostengünstige Strukturauslegung und Strukturoptimierung der Gitterstruktur realisiert werden können. Somit ermöglichen beispielsweise die Umstellung von 3D-Volumenelementen innerhalb der Finite-Elemente-Methode für die Topologieoptimierung auf Balkenelemente sowie die Möglichkeit der Integration der Knickrechnung in die Optimierung durch Balkenelemente nach der Balkentheorie zweiter Ordnung eine besonders zeit- und kostengünstige Strukturauslegung und Strukturoptimierung.

Als weiterhin besonders vorteilhaft hat es sich gezeigt, wenn bei der Ermittlung der jeweiligen Belastung Verformungen in Längsrichtung und in Querrichtung der jeweiligen Strebe ermittelt werden. Dadurch kann die Gitterstruktur besonders vorteilhaft optimiert werden.

Eine weitere Ausführungsform zeichnet sich dadurch aus, dass bei der Ermittlung der jeweiligen Belastung Freiheitsgrade der jeweiligen Knoten alle im Raum möglichen Verschiebungen und alle im Raum möglichen Verdrehungen an den Enden der Balkenelemente umfassen. Hierdurch kann die Gitterstruktur besonders vorteilhaft optimiert werden. Die Verschiebungen werden üblicherweise mit uₓ, u_{y} und u_{z} bezeichnet, wobei die Verdrehungen üblicherweise mit ϕₓ, ϕ_{y} und ϕ_{z} bezeichnet werden und sich dabei auf ein Koordinatensystem beziehen, welches eine erste Richtung in Form einer x-Richtung, eine senkrecht zur ersten Richtung verlaufende zweite Richtung in Form einer y-Richtung und eine dritte Richtung in Form einer z-Richtung definiert, die senkrecht zur ersten Richtung und senkrecht zur zweiten Richtung verläuft.

Um anhand der Topologieoptimierung eines besonders vorteilhafte last- und beanspruchungsgerechte Struktur beziehungsweise Geometrie der Gitterstruktur auffinden zu können, ist es ferner vorzugsweise vorgesehen, dass die virtuelle Gitterstruktur initial überdimensioniert ist beziehungsweise wird. Dies bedeutet, dass die Gitterstreben als Designspace in möglichst alle Raumrichtungen orientiert sein können. Darüber hinaus bietet es sich an, in additiver Aufbaurichtung zusätzlich Streben zu modellieren. Gitterstrukturen und insbesondere ihre Streben, die unter der Aufbauwinkelrestriktion bei den additiven Fertigungsverfahren für metallische Werkstoffe nicht fertigbar sind, werden somit von vorhinein berücksichtigt und nicht modelliert. Dies führt zu einer stützstrukturfreien Gitterstruktur, die auch nach der Topologieoptimierung mit den additiven Fertigungsverfahren für metallische Werkstoffe fertigbar ist.

Bei einer weiteren vorteilhaften Ausführungsform der Erfindung wird die Gitterstruktur in Abhängigkeit von einer Aufbaurichtung, entlang welcher das Bauteil durch das additive Fertigungsverfahren herzustellen ist beziehungsweise hergestellt wird, und/oder in Abhängigkeit von einem vorbestimmten Überhangwinkel und/oder als stützstrukturfreie Gitterstruktur definiert. Dadurch kann das Bauteil auf besonders einfache Weise und beispielsweise aus einem metallischen Werkstoff additiv gefertigt werden.

Schließlich hat es sich als besonders vorteilhaft gezeigt, wenn die Gitterstruktur vor der Topologieoptimierung in Abhängigkeit von der Aufbaurichtung aus einer sich periodisch wiederholenden Einzelzelle aufgebaut ist beziehungsweise wird, welche als eine Kombination aus kubisch raumzentriertem Gitter und kubisch flächenzentriertem Gitter ohne dessen senkrecht zur Aufbaurichtung verlaufenden Streben ausgebildet ist, wobei durch den raumzentrierten Knoten eine Strebe entlang der Aufbaurichtung und dabei beispielsweise entlang der z-Richtung verläuft. Hierdurch kann eine besonders hohe spezifische Steifigkeit gewährleistet werden.

Ein zweiter Aspekt der Erfindung betrifft ein Verfahren zum Herstellen wenigstens eines Bauteils. Bei dem Verfahren gemäß dem zweiten Aspekt der Erfindung wird das Bauteil durch ein additives Fertigungsverfahren in Abhängigkeit von einer durch das Verfahren gemäß dem ersten Aspekt der Erfindung optimierten Gitterstruktur hergestellt. Vorteile und vorteilhafte Ausgestaltungen des ersten Aspekts der Erfindung sind als Vorteile und vorteilhafte Ausgestaltungen des zweiten Aspekts der Erfindung anzusehen und umgekehrt.

Ein dritter Aspekt der Erfindung betrifft ein Computerprogramm, welches direkt in einen Speicher einer beziehungsweise der zuvor genannten elektronischen Recheneinrichtung ladbar ist, wobei das Computerprogramm Programm-Mittel aufweist, um das Verfahren gemäß dem ersten Aspekt der Erfindung beziehungsweise dessen Schritte auszuführen, wenn das Programm in der elektronischen Recheneinrichtung beziehungsweise durch die elektronische Recheneinrichtung ausgeführt wird. Somit implementiert das erfindungsgemäße Computerprogramm ein erfindungsgemäßes Verfahren auf der elektronischen Recheneinrichtung, wenn es auf der elektronischen Recheneinrichtung ausgeführt wird. Das Computerprogramm kann hierbei auch in Form eines Computerprogrammprodukts vorliegen, welches direkt in den Speicher der elektronischen Recheneinrichtung ladbar ist, mit Programmcode-Mitteln, um ein erfindungsgemäßes Verfahren auszuführen, wenn das Computerprogrammprodukt in der elektronischen Recheneinrichtung ausgeführt wird.

Ein vierter Aspekt der Erfindung betrifft einen elektronisch lesbaren Datenträger mit darauf gespeicherten elektronisch lesbaren Steuerinformationen, welche zumindest ein Computerprogramm gemäß dem dritten Aspekt der Erfindung umfassen und derart ausgestaltet sind, dass sie bei Verwendung des Datenträgers in einer elektronischen Recheneinrichtung ein Verfahren gemäß dem ersten Aspekt der Erfindung durchführen.

Weitere Vorteile, Merkmale und Einzelheiten der Erfindung ergeben sich aus der nachfolgenden Beschreibung eines bevorzugten Ausführungsbeispiels sowie anhand der Zeichnung. Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombination oder in Alleinstellung verwendbar, ohne den Rahmen der Erfindung zu verlassen.

Die Zeichnung zeigt in:
- FIG 1: ein Flussdiagramm zum Veranschaulichen eines erfindungsgemäßen Verfahrens zur Optimierung eines zumindest eine virtuelle Gitterstruktur aufweisenden virtuellen Modells eines durch ein additives Fertigungsverfahren herzustellenden Bauteils;
- FIG 2: schematische Darstellungen von Gitterzellen;
- FIG 3: weitere schematische Darstellungen von weiteren Gitterzellen;
- FIG 4: weitere Darstellungen von weiteren Gitterzellen;
- FIG 5: eine schematische Seitenansicht einer auch als Gitterstrebe bezeichneten Strebe, welche in der virtuellen Gitterstruktur zum Einsatz kommen kann;
- FIG 6: eine schematische Darstellung eines möglichen Querschnitts der Gitterstrebe gemäß FIG 5;
- FIG 7: eine schematische Darstellung eines weiteren möglichen Querschnitts der Gitterstrebe gemäß FIG 5;
- FIG 8: eine schematische Darstellung eines möglichen Knotens der Gitterstruktur;
- FIG 9: eine schematische Darstellung eines weiteren möglichen Knotens der Gitterstruktur;
- FIG 10: ausschnittsweise eine schematische Darstellung der virtuellen Gitterstruktur;
- FIG 11: eine schematische Perspektivansicht der initialen Gitterstruktur; und
- FIG 12: eine schematische Perspektivansicht der optimierten Gitterstruktur.

In den Figuren sind gleiche oder funktionsgleiche Elemente mit gleichen Bezugszeichen versehen.

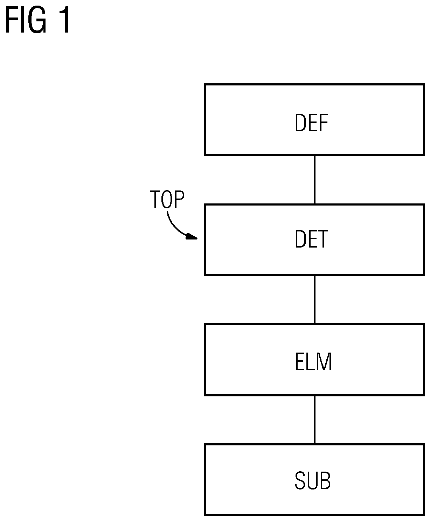

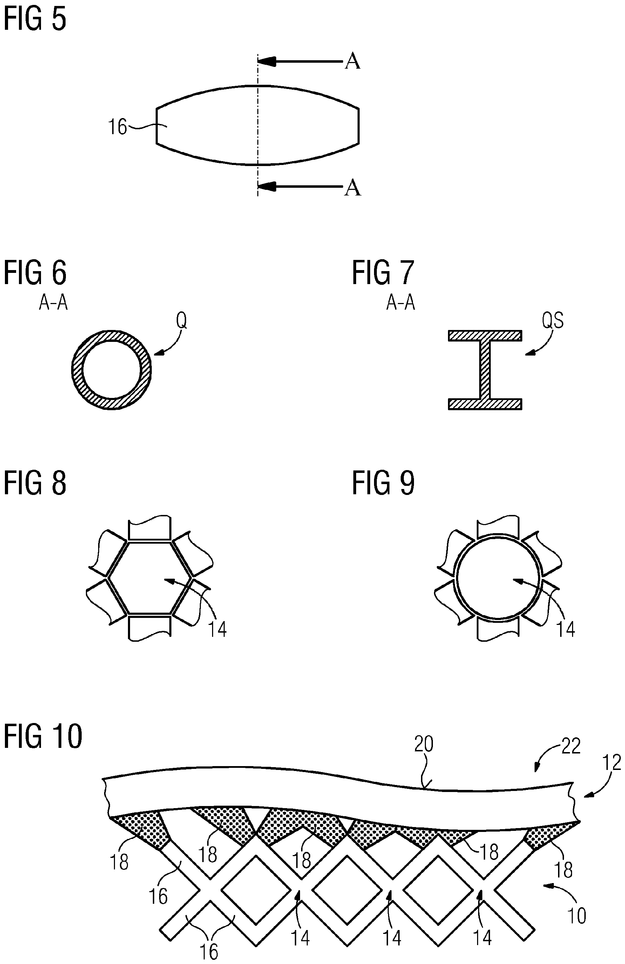

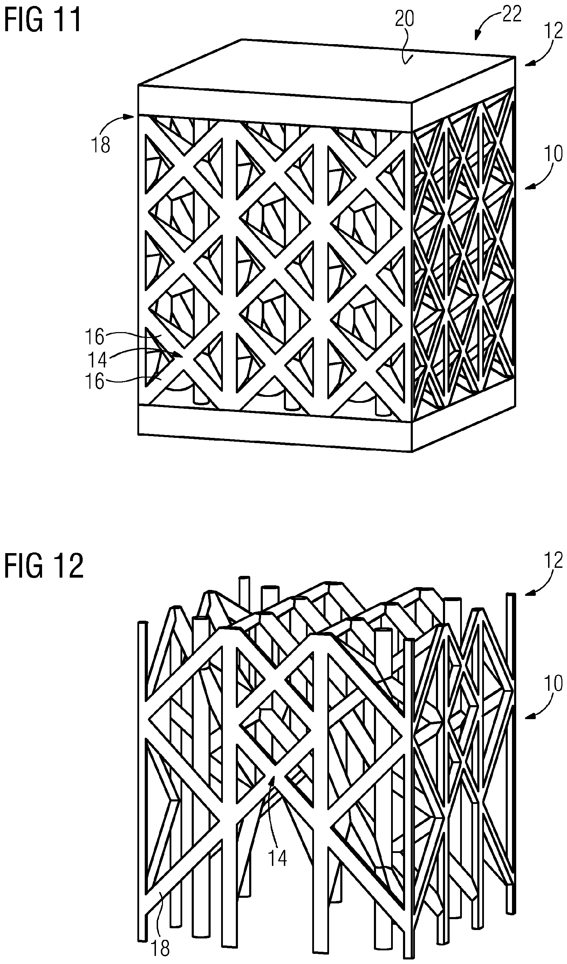

FIG 1 zeigt ein Flussdiagramm, anhand dessen im Folgenden ein Verfahren zur Optimierung eines zumindest eine virtuelle Gitterstruktur 10 (FIG 11) aufweisenden virtuellen Modells 12 (FIG 10) eines durch ein additives Fertigungsverfahren herzustellenden Bauteils erläutert wird. Im Rahmen eines Verfahrens zum Herstellen des Bauteils wird das Bauteil durch das auch als generatives Fertigungsverfahren bezeichnete additive Fertigungsverfahren hergestellt, wobei das Bauteil beispielsweise durch 3D-Drucken hergestellt wird. Das Bauteil wird beispielsweise aus einem Werkstoff, insbesondere aus einem metallischen Werkstoff, hergestellt, indem der Werkstoff beispielsweise auf ein Substrat aufgebracht, insbesondere aufgedruckt, wird. Insbesondere werden aus dem Werkstoff Schichten hergestellt, welche zumindest teilweise aufeinander und/oder übereinander angeordnet und miteinander verbunden, insbesondere miteinander verschmolzen, werden. Aus den Schichten wird das Bauteil hergestellt beziehungsweise aufgebaut, sodass das Bauteil Schicht für Schicht beziehungsweise schichtweise hergestellt wird. Dabei zeigt FIG 11 die Gitterstruktur 10 in ihrer initialen Ausgestaltung, Geometrie oder Form, wobei FIG 12 die durch das Verfahren optimierte beziehungsweise voroptimierte Gitterstruktur 10 zeigt. Mit anderen Worten zeigt FIG 12 die Gitterstruktur 10 nach ihrer durch das Verfahren realisierten beziehungsweise realisierbaren Optimierung.

Besonders gut aus FIG 5 bis 12 ist erkennbar, dass die virtuelle Gitterstruktur 10 Knoten 14 und Streben 16 aufweist, die an den jeweiligen, auch als Knotenpunkte bezeichnete, Knoten 14 miteinander verbunden sind. Die jeweilige Strebe 16 wird auch als Gitterstrebe bezeichnet und weist eine geradlinige Erstreckung auf, insbesondere vollständig durchgehend von Knoten 14 zu Knoten 14.

Außerdem weist die Gitterstruktur 10 Anbindungspunkte 18 an eine virtuelle Bauteilaußenhaut 20 des virtuellen Modells 12 auf, sodass die virtuelle Gitterstruktur 10 über ihre virtuellen Anbindungspunkte 18 an die virtuelle Bauteilaußenhaut 20 anbindbar beziehungsweise angebunden ist. Die Gitterstruktur 10 ist im Rahmen des Verfahrens eine virtuelle Gitterstruktur beziehungsweise das Modell 12 ist im Rahmen des Verfahrens ein virtuelles Modell, da die Gitterstruktur 10 beziehungsweise das Modell 12 nicht tatsächlich existieren, das heißt dass die Gitterstruktur 10 beziehungsweise das Modell 12 keine tatsächlich existierenden, physischen Körper sind, sondern die Gitterstruktur 10 beziehungsweise das Modell 12 ist durch Daten gebildet oder definiert, die durch eine oder in einer elektronischen Recheneinrichtung, durch welche das Verfahren durchgeführt wird, verarbeitet werden.

Die Knoten 14 sind erste virtuelle Strukturelemente der virtuellen Gitterstruktur 10, wobei die Streben 16 zweite virtuelle Strukturelemente der virtuellen Gitterstruktur 10 sind, und die Anbindungspunkte 18 sind dritte virtuelle Strukturelemente der virtuellen Gitterstruktur 10. Somit ist die virtuelle Gitterstruktur 10, insbesondere vollständig, durch die virtuellen Strukturelemente aufgebaut. Bei einem ersten Schritt DEF des Verfahrens wird die virtuelle Gitterstruktur 10 als ein auch als Designspace bezeichneter Gestaltungsbereich 22 (FIG 10) definiert, dessen Strukturelemente eine jeweilige, initiale Ausgangsgeometrie aufweisen. Durch die jeweilige initiale Ausgangsgeometrie der virtuellen Strukturelemente ist die in FIG 10 gezeigte initiale Geometrie der virtuellen Gitterstruktur 10 gebildet, wobei die virtuelle Gitterstruktur 10 ihre initiale Geometrie vor einer Topologieoptimierung aufweist, die im Rahmen des Verfahrens durchgeführt und im Folgenden noch erläutert wird. Die Topologieoptimierung ist in FIG 1 mit TOP bezeichnet und umfasst beispielsweise einen zweiten Schritt DET, bei welchem durch die Topologieoptimierung TOP eine jeweilige, aus wenigstens einer auf das virtuelle Modell wirkenden Last resultierende Belastung des jeweiligen Strukturelements ermittelt, insbesondere berechnet, wird. Hierzu empfängt beispielsweise die elektronische Recheneinrichtung eine durch eine Person bewirkte Eingabe in die elektronische Recheneinrichtung, wobei die Eingabe die genannte Last charakterisiert. Die Topologieoptimierung TOP weist beispielsweise einen dritten Schritt ELM auf, bei welchem durch die Topologieoptimierung TOP zumindest eines der Strukturelemente, dessen ermittelte Belastung einen vorbestimmten Schwellenwert unterschreitet, aus dem Gestaltungsbereich 22 (Designspace) eliminiert wird. Somit werden beispielsweise bei dem dritten Schritt ELM diejenigen der Strukturelemente identifiziert, die durch die Last nicht oder derart belastet werden, dass ihre Belastung unterhalb des Schwellenwerts liegt. Diese Strukturelemente können dann aus dem Gestaltungsbereich 22 eliminiert, das heißt entfernt werden, insbesondere derart, dass eine aus der Last resultierende Gesamtbelastung der virtuellen Gitterstruktur 10 noch ein vorbestimmtes Optimierungskriterium erfüllt. Das vorbestimmte Optimierungskriterium umfasst beispielsweise, dass die Gesamtbelastung einen vorgebbaren Grenzwert unterschreitet.

Die Topologieoptimierung TOP umfasst vorzugsweise einen vierten Schritt SUB, bei welchem bei der Topologieoptimierung TOP zwischen jeweiligen Beanspruchungsfällen der jeweiligen Strukturelemente differenziert wird. Aus der Last resultiert beispielsweise wenigstens ein jeweiliger Beanspruchungsfall, dem das jeweilige Strukturelement unterworfen ist beziehungsweise wird. Der Beanspruchungsfall kann eine Zugbeanspruchung und/oder eine Druckbeanspruchung und/oder eine Biegebeanspruchung und/oder eine Torsionsbeanspruchung und/oder eine Scherbeanspruchung und/oder eine Schubbeanspruchung des jeweiligen Strukturelements sowie eine Überlagerung dieser Beanspruchungen umfassen. Bei dem vierten Schritt SUB wird zwischen diesen Beanspruchungsfällen unterschieden. In Abhängigkeit von dem jeweiligen Beanspruchungsfall wird zumindest eine der Ausgangsgeometrien durch eine von der jeweiligen Ausgangsgeometrie unterschiedliche Optimierungsgeometrie ersetzt. Mit anderen Worten wird die jeweilige initiale Ausgangsgeometrie zumindest eines der Strukturelemente durch die Optimierungsgeometrie ersetzt beziehungsweise zur Optimierungsgeometrie umgewandelt, wodurch die virtuelle Gitterstruktur 10 ausgehend von ihrer initialen Geometrie zu der optimierten beziehungsweise voroptimierten Geometrie weitergebildet wird.

Während beispielsweise die Gitterstruktur 10 in ihrer initialen Geometrie durch genau eine sich periodisch wiederholende Einzelzelle gebildet wird beziehungsweise aufgebaut ist, kann die virtuelle Gitterstruktur 10 in ihrer optimierten Geometrie aus mehreren, voneinander unterschiedlichen Einzelzellen beziehungsweise Gittertypen aufgebaut sein. Die Gitterstruktur 10 wird insbesondere derart optimiert, dass sie wenigstens ein vorbestimmtes Optimierungskriterium erfüllt, welches beispielsweise umfasst, dass die aus der Last resultierende Gesamtbelastung unterhalb des genannten Grenzwerts liegt, und dass das Gewicht der Gitterstruktur 10 unterhalb eines Gewichtsgrenzwerts liegt und vorzugsweise so gering wie möglich ist. Außerdem ist es vorgesehen, dass bei der Topologieoptimierung TOP und somit bei den Schritte DET, ELM, SUB und/oder DEF ausschließlich Balkenelemente und nicht etwa dreidimensionale Volumenelemente zur Bildung beziehungsweise Beschreibung des Gestaltungsbereiches 22 verwendet werden. Hierdurch kann die Gitterstruktur 10 zeit- und kostengünstig optimiert werden. Durch das Verfahren kann ein besonders hoher Grad der Potenzialausnutzung in Bezug auf die Realisierung einer besonders hohen spezifischen Steifigkeit des Bauteils realisiert werden.

Das Verfahren ist somit eine Optimierungsmethodik, die eine besonders effiziente Materialausnutzung ermöglicht und die Realisierung neuartiger und insbesondere metallischer Leichtbaustrukturen ermöglicht. Mit anderen Worten kann die Gitterstruktur 10 insbesondere in ihrer optimierten Geometrie eine besonders gewichtsgünstige und gleichzeitig besonders steife Leichtbaustruktur sein, welche beispielsweise aus einem metallischen Werkstoff gebildet wird. Mit anderen Worten ist der zuvor genannte Werkstoff beispielsweise ein metallsicher Werkstoff. Durch die Verwendung von Balkenelementen anstelle von dreidimensionalen Volumenelementen können eine Rechenzeit und ein Rechenaufwand zur Realisierung des Verfahrens besonders gering gehalten werden, sodass besonders zeit- und kostengünstige Optimierungslösungen darstellbar sind. Gegenüber herkömmlichen Optimierungslösungen von Gitterstrukturen ermöglicht das Verfahren eine Umsetzung einer stützstrukturfreien Optimierungslösung, sodass die zuvor genannte tatsächliche Gitterstruktur auf Basis der virtuellen, optimierten Gitterstruktur 10 als stützstrukturfreie Gitterstruktur durch additive Fertigung hergestellt werden kann.

Der erste Schritt DEF alleine erscheint zunächst unökonomisch, da beispielsweise aufgrund der dünnwandigen Streben 16 beziehungsweise aufgrund einer dünnwandigen Stabstruktur ein beispielsweise für die Topologieoptimierung TOP zum Einsatz kommendes Finite-Elemente-Netz sehr fein sein muss, sodass in Folge dessen die Anzahl an 3D-finiten-Elemente sehr groß ist. Dies kann für sich alleine betrachtet beziehungsweise ohne entsprechende Gegenmaßnahmen zu einer sehr langen Rechenzeit führen. Diesem Problem wird jedoch dadurch begegnet, dass anstelle von dreidimensionalen Volumenelementen Balkenelemente innerhalb der Finite-Elemente-Methode für die Topologieoptimierung TOP verwendet werden. Außerdem ist hierdurch eine Möglichkeit der Integration einer Knickrechnung in die Optimierung der Balkenelemente nach der Balkentheorie zweiter Ordnung ermöglicht, wodurch eine besonders zeit- und kostengünstige Strukturauslegung und Strukturoptimierung darstellbar sind.

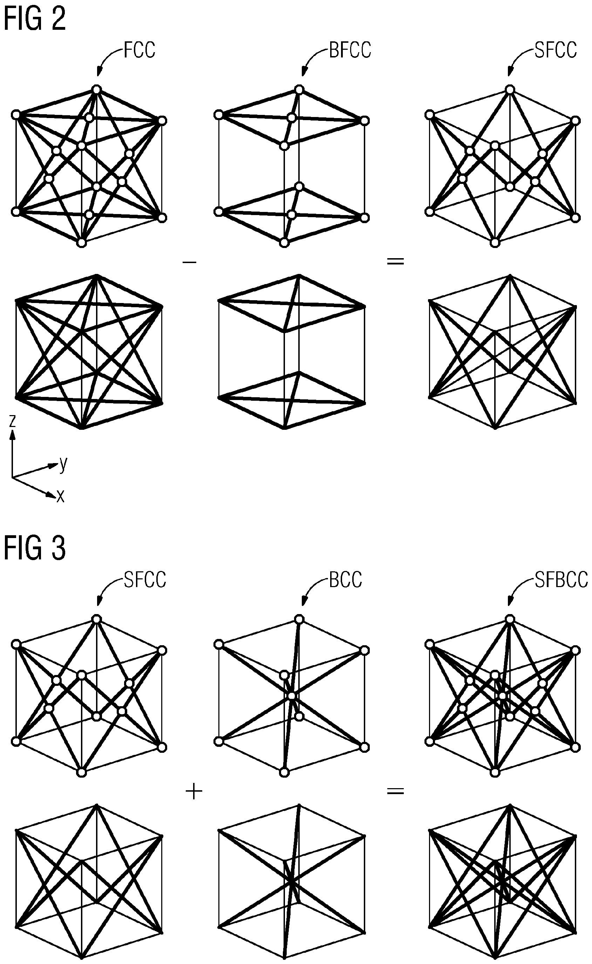

Des Weiteren hat es sich als vorteilhaft gezeigt, wenn eine initiale und absichtlich beziehungsweise gezielt vorgesehene Überdimensionierung der virtuellen Gitterstruktur 10 vor der Topologieoptimierung TOP vorgesehen ist. Diese initiale und absichtliche Überdimensionierung der stützstrukturfreien Gitterstruktur 10 für den Designspace ist bereits vor der einen Optimierungsgang darstellenden Topologieoptimierung TOP an Fertigungsrestriktionen für das additive Fertigungsverfahren angepasst und sorgt somit für eine besonders vorteilhafte technische Umsetzbarkeit. Hierzu wird beispielsweise die Geometrie der jeweiligen Einzelzelle, aus welcher die Gitterstruktur 10 initial periodisch aufgebaut ist, gegenüber herkömmlichen Einzelzellen verändert und angepasst. Gegenüber herkömmlichen Einzelzellengeometrien unterscheidet sich diese entwickelte Geometrie signifikant, welche im Folgenden beschrieben wird:
Ausgangspunkt ist eine in FIG 2 schematisch dargestellte und als kubisch flächenzentriertes Gitter FCC ausgebildete Einzelzelle. Von dem kubisch flächenzentrierten Gitter FCC werden alle Streben abgezogen beziehungsweise eliminiert, die orthogonal zur auch als Baurichtung bezeichneten Aufbaurichtung liegen, entlang welcher das Bauteil durch das generative Fertigungsverfahren hergestellt beziehungsweise aufgebaut wird. Das kubisch flächenzentrierte Gitter FCC beziehungsweise die jeweilige Einzelzelle und/oder die Gitterstruktur 10 bezieht sich auf ein in FIG 2 dargestelltes Koordinatensystem, welches drei paarweise senkrecht zueinander verlaufende Richtungen definiert. Eine erste der Richtungen ist eine sogenannte und auch mit x bezeichnete x-Richtung, eine zweite der Richtungen ist eine einfach auch mit y bezeichnete y-Richtung und die dritte Richtung ist eine einfach auch mit z bezeichnete z-Richtung. Dabei fällt beispielsweise die Aufbaurichtung mit der z-Richtung zusammen. Bei dem in FIG 2 veranschaulichten Ausführungsbeispiel wird von dem kubisch flächenzentrierten Gitter FCC ein kubisch flächenzentriertes Basisgitter BFCC subtrahiert, wodurch man ein kubisch seitenflächenzentriertes Gitter SFCC erhält. Das kubisch seitenflächenzentrierte Gitter SFCC wird auch als kubisch seitenflächenzentrierte Einzelzelle bezeichnet.

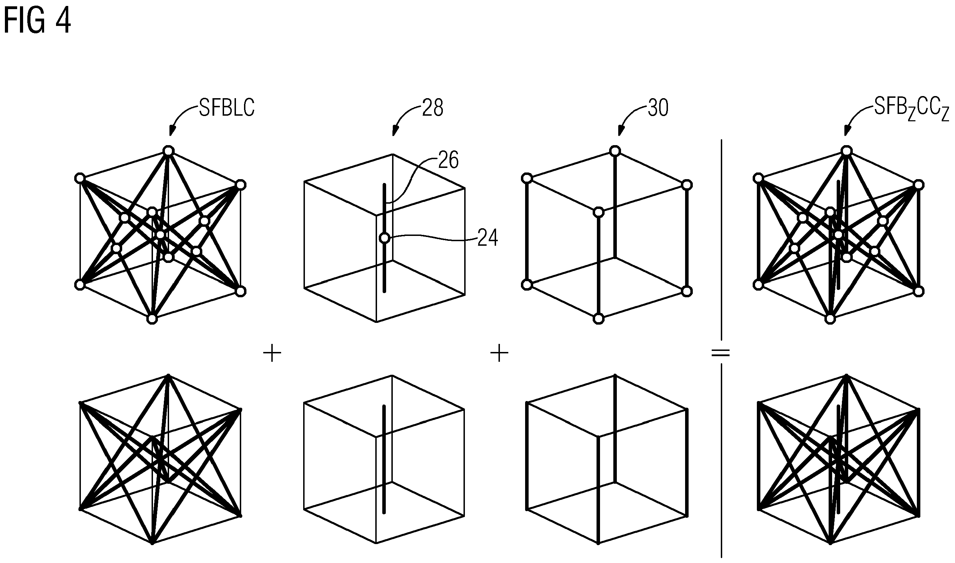

Aus FIG 3 ist erkennbar, dass dann beispielsweise das kubisch seitenflächenzentrierte Gitter SFCC mit einem kubisch raumzentrierten Gitter BCC beziehungsweise mit einer kubisch raumzentrierten Einzelzelle kombiniert wird. Die kubisch seitenflächenzentrierte Einzelzelle und die kubisch raumzentrierte Einzelzelle bilden zusammen in einer Einzelzelle ein im Folgenden als SFBCC bezeichnetes Gitter. Werden zusätzlich alle Kanten des auch als Einzelzelle bezeichneten Gitters SFBCC in der additiven Aufbaurichtung (z-Richtung) mit Streben verstärkt, so erhält man ein Gitter beziehungsweise eine Einzelzelle, welche mit SFBCC_{z} bezeichnet wird. Im Gitterverbund von mehreren solcher SFBCC_{z}-Einzelzellen ist der raumzentrierte Knotenpunkt 24 der Streben 16 lediglich mit den Eckpunkten der jeweiligen Einzelzelle verbunden. Um eine besonders umfangreiche Designfreiheit zu realisieren, wird dieser raumzentrierte Knotenpunkt 24 durch eine weitere Strebe 26 in Aufbaurichtung (z-Richtung) mit dem darüber- und darunterliegenden raumzentrierten Knotenpunkt verbunden und somit verstärkt. Man erhält eine neu entwickelte und absichtlich überdimensionierte Einzelzelle, welche auch als SFB_{z}CC_{z} bezeichnet wird. Dies ist aus FIG 4 erkennbar. Durch die in FIG 4 mit 28 bezeichnete Einzelzelle wird die Strebe 26 durch den Knotenpunkt 24 gelegt, und durch die in FIG 4 mit 30 bezeichnete Einzelzelle werden die Streben in z-Richtung durch die BCC-Eckpunkte verstärkt.

Die Gitterstruktur 10 wird in ihrer initialen Geometrie aus der sich periodischen wiederholenden SFB_{z}CC_{z}-Einzelzelle aufgebaut und weist somit ein zunächst überdimensioniertes und fertigungsgerechtes Design auf. Dann erfolgt anhand der Balkenelemente die Topologieoptimierung TOP, bei welcher die Verwendung von 3D-Volumenelementen zur Beschreibung des Gestaltungsbereichs 22 unterbleibt. Dadurch kann im Rahmen der Topologieoptimierung TOP wenigstens eine Finite-Elemente-Methode zeit- und kostengünstig durchgeführt werden, um die jeweilige Belastung zu ermitteln. Insbesondere kann dadurch die Möglichkeit einer integrierten Rechnung gegen Knicken geschaffen werden.

Bei dem Schritt SUB erfolgt die Substituierung der initialen Ausgangsgeometrie durch eine beanspruchungsgerechte Optimierungsgeometrie.

FIG 5 zeigt beispielhaft eine der Streben 16, welche beispielsweise einen in FIG 6 gezeigten und mit Q bezeichneten Querschnitt aufweisen kann. Beispielsweise weist die jeweilige Strebe 16 den Querschnitt Q bei der initialen Geometrie der Gitterstruktur 10 auf. Im Rahmen des Schritts SUB wird der Querschnitt Q beispielsweise durch einen in FIG 7 beispielhaft gezeigten Querschnitt QS ersetzt.

FIG 8 und 9 zeigen beispielhaft mögliche Geometrien der auch als Gitterknoten bezeichneten Knoten 14, wobei beispielsweise im Rahmen des Schritts SUB der in FIG 9 gezeigte Knoten 14 durch den in FIG 8 gezeigten Knoten 14 ersetzt werden kann oder umgekehrt.

Gegenüber der initialen Geometrie weist die die optimierte Geometrie aufweisende Gitterstruktur 10 eine erhöhte spezifische Steifigkeit auf, sodass also das Verhältnis aus Steifigkeit zu Gewicht größer als mit der intitialen Geometrie ist.

Die virtuelle Gitterstruktur 10 und schließlich die tatsächlich hergestellte und somit körperlich vorhandene Gitterstruktur des Bauteils können als neuartige Leichtbaustrukturen durch ein additives Fertigungsverfahren beziehungsweise durch ein zum Durchführen des Verfahrens ausgebildetes Computerprogrammprodukt generiert werden. Insbesondere kann das Bauteil als ein rotierendes Bauteil mit einer besonders hohen Rotationsgeschwindigkeit bei gleichbleibender oder gar verbesserter mechanischer und thermischer Performance dargestellt werden. Risse können bei risskritischen Strukturen durch Gitterstrukturen schneller gestoppt werden. Schwingungseigenschaften insbesondere im Hinblick auf Bauteileigenmoden, Bauteilsteifigkeiten, Bauteilverformungen und in Zukunft auch multiphysikalische Problemstellungen können durch das beschriebene Verfahren gezielt eingestellt und optimiert werden. Die Gitterstruktur 10 ermöglicht beispielsweise die Realisierung einer besonders hohen Bauteiloberfläche, wodurch eine besonders hohe Kühlleistung effektiv und effizient dargestellt werden kann. Außerdem ermöglicht das Verfahren die Realisierung einer besonders hohen Zeit- und Dauerfestigkeit.

Zusammenfassend ist festzuhalten, dass beispielsweise das überdimensionierte initiale Gitterstrukturmodell als Designspace in der Topologieoptimierung TOP definiert wird. Mit Hilfe der Topologieoptimierung TOP erhält man je nach Anforderung ein voroptimiertes Gitterdesign. Ein großer Vorteil liegt hierbei in dem nachgelagerten zweiten Optimierungsschritt, bei welchem die drei Arten von Strukturelementen (Knoten 14, Streben 16 und Anbindungspunkte 18) beanspruchungsgerecht und insbesondere je nach Zug, Druck, Biegung, Torsion, Scherung, Schub durch die jeweils vorteilhafte Querschnittsgeometrie substituiert werden. Die jeweilige Belastung kann durch eine Finite-Elemente-Methode ermittelt werden, welche eine Grundlage der Topologieoptimierung TOP bilden kann. Die Informationen für die vorteilhaften Geometrien der Strukturelemente für den jeweiligen Beanspruchungsfall können aus einer hinterlegten Datenbank abgerufen werden. Der Designspace wird durch ein passendes Balkenmodell beschrieben, um beispielsweise die Finite-Elemente-Methode auf Basis von Balkenelementen beziehungsweise Balken und nicht etwa auf Basis von 3D-Volumenelementen durchzuführen. Dadurch kann die Anzahl an Finiten-Elementen gering gehalten werden, und optional kann gleichzeitig gegen Knicken gerechnet werden, wenn zum Beispiel Balkenelemente nach der Balkentheorie zweiter Ordnung (Knickstab) eingesetzt werden. Somit ist es gegenüber herkömmlichen Vorgehen nicht mehr nötig, zusätzlich die Optimierungslösung gegen Knicken nachzurechnen. Dadurch kann das Verfahren zeit- und kostengünstig durchgeführt werden. Der Designspace stellt ein Startdesign dar, von welchem ausgehend die Gitterstruktur 10 optimiert und somit beispielsweise zur optimierten Geometrie weitergebildet wird. Die Überdimensionierung der Einzelzelle und somit der Gitterstruktur 10 insgesamt in ihrer initialen Geometrie erfolgt aus fertigungstechnischen und strukturmechanischen Gründen, um auf Basis der optimierten Gitterstruktur 10 das tatsächliche Bauteil mit der tatsächlichen, der Gitterstruktur 10 zumindest nahezu entsprechenden Gitterstruktur herstellen zu können, ohne dass hierzu Stützstrukturen zum Einsatz kommen müssen.

Die Gitterstruktur 10 weist in ihrer finalen Form beziehungsweise in ihrer optimierten Geometrie nicht oder nicht nur sich periodisch wiederholende Einzelzellen auf. Die jeweiligen Strukturelemente der optimierten Gitterstruktur 10 können sich in ihren Geometrien, insbesondere in ihren Querschnitten oder Querschnittsformen, voneinander unterscheiden, sodass beispielsweise die optimierte Gitterstruktur 10 unterschiedliche Geometrien, insbesondere unterschiedliche Querschnitte, der Streben 16 und/oder der Knoten 14 und/oder der Anbindungspunkte 18 aufweist. Somit unterscheidet sich die optimierte Gitterstruktur 10 äußerlich stark von solchen Gitterstrukturen, die aus genau einer sich periodisch wiederholenden Einzelzelle aufgebaut sind. Somit weist die optimierte Gitterstruktur 10 nicht etwa eine periodische, sondern vielmehr eine aperiodische Gitterstruktur auf.

### Bezugszeichenliste

- 10: Gitterstruktur
- 12: Modell
- 14: Knoten
- 16: Strebe
- 18: Anbindungspunkt
- 20: Bauteilaußenhaut
- 22: Gestaltungsbereich
- 24: Knotenpunkt
- 26: Strebe
- 28: Einzelzelle
- 30: Einzelzelle
- DEF: erster Schritt
- DET: erster Schritt
- ELM: dritter Schritt
- SUB: vierter Schritt
- TOP: Topologieoptimierung
- FCC: flächenzentriertes Gitter
- BFCC: flächenzentriertes Basisgitter
- SFCC: seitenflächenzentriertes Gitter
- BCC: kubisch raumzentrierten Gitter
- SFBCC: Gitter
- SFB_{z}CC_{z}: Gitter
- Q: Querschnitt
- QS: Querschnitt

## Patentansprüche

1. Verfahren zur Optimierung eines zumindest eine virtuelle Gitterstruktur (10) aufweisenden virtuellen Modells (12) eines durch ein additives Fertigungsverfahren herzustellenden Bauteils, bei welchem zumindest die virtuelle Gitterstruktur (10), welche Knoten (14) als erste Strukturelemente und an den Knoten (14) miteinander verbundene Streben (16) als zweite Strukturelemente aufweist, anhand einer Topologieoptimierung (TOP), die durch eine elektronische Recheneinrichtung durchgeführt wird, optimiert wird,
**dadurch gekennzeichnet, dass**:
- die Gitterstruktur (10) auch als Anbindungspunkte (18) an eine virtuelle Bauteilaußenhaut (20) des virtuellen Modells (12) ausgebildete dritte Strukturelemente aufweist und als ein Gestaltungsbereich (22), dessen Strukturelemente eine jeweilige Ausgangsgeometrie aufweisen, definiert wird (DEF) ;
- durch die Topologieoptimierung (TOP) eine jeweilige, aus wenigstens einer auf das virtuelle Modell (12) wirkenden Last resultierende Belastung des jeweiligen Strukturelements ermittelt wird (DET);
- durch die Topologieoptimierung (TOP) zumindest eines der Strukturelemente, dessen ermittelte Belastung einen vorbestimmten Schwellenwert unterschreitet, aus dem Gestaltungsbereich (22) eliminiert wird;
- bei der Topologieoptimierung (TOP) zwischen jeweiligen Beanspruchungsfällen der jeweiligen Strukturelemente differenziert und in Abhängigkeit von dem jeweiligen Beanspruchungsfall zumindest eine der Ausgangsgeometrien durch eine Optimierungsgeometrie ersetzt wird (SUB); und
- bei der Topologieoptimierung (TOP) Balkenelemente zur Bildung des Gestaltungsraums (22) verwendet werden (DEF, DET, SUB) .

2. Verfahren nach Anspruch 1,
**dadurch gekennzeichnet, dass**
bei der Topologieoptimierung (TOP) eine Finite-Elemente-Methode durchgeführt wird, anhand welcher die jeweilige Belastung ermittelt wird.

3. Verfahren nach Anspruch 1 oder 2,
**dadurch gekennzeichnet, dass**
bei der Topologieoptimierung (TOP) anhand der Balkentheorie Zweiter Ordnung für das jeweilige Balkenelement eine Knickstab-Berechnung durchgeführt wird.

4. Verfahren nach einem der vorhergehenden Ansprüche,
**dadurch gekennzeichnet, dass**
bei der Ermittlung der jeweiligen Belastung Verformungen in Längsrichtung und in Querrichtung der jeweiligen Strebe (16) ermittelt werden.

5. Verfahren nach einem der vorhergehenden Ansprüche,
**dadurch gekennzeichnet, dass**
bei der Ermittlung der jeweiligen Belastung Freiheitsgrade der jeweiligen Knoten (14) alle im Raum möglichen Verschiebungen und alle im Raum möglichen Verdrehungen an den Enden der Balkenelemente umfassen.

6. Verfahren nach einem der vorhergehenden Ansprüche,
**dadurch gekennzeichnet, dass**
die jeweilige Ausgangsgeometrie überdimensioniert ist.

7. Verfahren nach einem der vorhergehenden Ansprüche,
**dadurch gekennzeichnet, dass**
die Gitterstruktur (10) in Abhängigkeit von einer Aufbaurichtung (z), entlang welcher das Bauteil durch das additive Fertigungsverfahren herzustellen ist, und/oder in Abhängigkeit von einem vorbestimmten Überhangwinkel und/oder als stützstrukturfreie Gitterstruktur definiert wird.

8. Verfahren nach einem der vorhergehenden Ansprüche,
**dadurch gekennzeichnet, dass**
die Gitterstruktur (10) vor der Topologieoptimierung in Abhängigkeit von einer Aufbaurichtung (z), entlang welcher das Bauteil durch das additive Fertigungsverfahren herzustellen ist, aus einer sich periodisch wiederholenden Einzelzelle aufgebaut ist, welche als eine Kombination aus kubisch raumzentriertem Gitter (BCC) und kubisch flächenzentriertem Gitter (FCC) ohne dessen senkrecht zur Aufbaurichtung (z) verlaufenden Streben (16) ausgebildet ist, wobei durch den raumzentrierten Knoten (24) eine Strebe (26) entlang der Aufbaurichtung (z) verläuft.

9. Verfahren zum Herstellen wenigstens eines Bauteils, bei welchem das Bauteil durch ein additives Fertigungsverfahren in Abhängigkeit von einer durch ein Verfahren nach einem der Ansprüche 1 bis 8 optimierten Gitterstruktur hergestellt wird.

10. Computerprogramm, welches direkt in einen Speicher einer elektronischen Recheneinrichtung ladbar ist, mit Programm-Mitteln, um die Schritte des Verfahrens nach einem der Ansprüche 1 bis 8 auszuführen, wenn das Programm in der elektronischen Recheneinrichtung ausgeführt wird.

11. Elektronisch lesbarer Datenträger mit darauf gespeicherten elektronisch lesbaren Steuerinformationen, welche zumindest ein Computerprogramm nach Anspruch 10 umfassen und derart ausgestaltet sind, dass sie bei Verwendung des Datenträgers in einer elektronischen Recheneinrichtung ein Verfahren nach einem der Ansprüche 1 bis 8 durchführen.
